# EUROPEAN PATENT APPLICATION

(11) **EP 0 575 285 A1**
(43) Date of publication of application: **22.12.1993**
(21) Application number: 93610035.3
(22) Date of filing: 03.06.1993
(51) Int. Cl.: F24F 12/00, F24F 7/08

(54) **Heat exchanger for heat recovering ventilation**

(30) Priority: 09.06.1992 DK 761/92
(71) Applicant: TURBOVENT A/S, DK-9600 Ars (DK)
(72) Inventor: Staehr, Preben, DK-9600 Ars (DK)
(74) Representative: Blichfeldt, Mogens Erhardt

(57) **Abstract**

A particularly efficient heat recuperating heat exchanger arrangement, in particular for recuperation of heat from a fluid (I), such as a gaseous fluid and transmission of this heat to another, colder fluid (II), such as a gaseous fluid, has a heat exchanger (VV) which the two fluids pass in opposite directions. For the entry of one fluid (I or II, such as I) into the heat exchanger a heat exchanger end an inlet (VVA1) is provided. In the opposite end there is a discharge (VVU1) for fluid (I). For the other fluid (II) there is provided at least either an input box device (B) and/or a discharge box device (T) in conjunction with the heat exchanger (VV). In order to allow entry of it into the heat exchanger (VV) (II or I, such as II) near the end mentioned which is provided with a discharge (VVU1) a heat exchanger side has an inlet (VVA2). The heat exchanger (VV) is near the second of the ends provided with an inlet (VVA1) provided with a heat exchanger surface with an outlet (VVU2) for this second fluid (II) which via a box device (K2) disposed along this side of the heat exchanger is led to the place of consumption of the fluid.

## Description

The present invention relates to a heat exchanger arrangement for the recuperation of heat, in particular for recuperation of heat from a fluid, such as a gaseous fluid and transmission of this heat to another, colder fluid, such as a gaseous fluid, whereby the heat exchanger arrangement is of a kind there the two fluids pass through a heat exchanger in opposite directions.

A large number of heat exchangers of this type are known, comprising those where the two fluids are carried to and from the heat exchanger in a coaxial relationship to each other.

There is however a problem, in particular in connection with stables with young or newborn animals that it is desirable to regulate the efficiency of the heat recuperation of the heat exchange as well as a possibility of adding a further amount of the second fluid without recuperated heat.

Simultaneously it is desired that the two fluids to, respectively from the heat exchanger may be connected to in particular the ceiling and floor areas of a stable space by means of simple straight pipes.

This is obtained in a heat exchanger arrangement of the kind mentioned in the introduction by letting the heat exchanger arrangement comprise a heat exchanger which is provided with an input at one heat exchanger end for one of the fluids and with an output for the same fluid at the opposite end whereby there is provided for the fluid at least either an input box device and/or an output box device in conjunction with the heat exchanger, and where the heat exchanger by means of a side close to that end which is provided with an output is provided with an input for the other fluid and that the heat exchanger at a side close to the the other end provided with an input is provided with an output for the other fluid, which fluid is conducted via a box device disposed along this side of the heat exchanger to a place, section or area of consumption for heat exchanged fluid.

By means of such embodiments according to the present invention there is provided a heat exchanger arrangement which is easily fitted with one or two register arrangements by means of which such a desired control of the ventilation air in particular in stables for young or recently born animals may be obtained in a fairly simple manner.

Hence a heat exchanger arrangement according to the invention may be designed and installed in a way such that the heat exchanger with the box elements mentioned may be fitted to the outside of a wall with two fluid conduits one above the other with a distance between them and leading through the wall in order that the fluid that flows into in particular the stable space into the ceiling area through the uppermost conduit, while the other fluid, the heat of which it is desired to recuperate, is led out through the lowermost conduit which will normally be fitted somewhat above floor level.

This solution may be advantageous in stables with e.g. slatted floor because inavoidable condensate generated in the the heat exchanger may flow directly through the latticed floor and further to a liquid manure collecting arrangement.

When mounting the heat exchanger on the inside its lower end may in accordance with this consideration possibly directly serve as an immediate input for spent air from the stable space, from which spent air the heat is to be recuperated.

The fluid which flows from this area in the stable contains fairly large amounts of ammonia as well as a considerable part of dust or dust particles, and neither the ammonia, nor the dust or the the dust particles are desired back into the stable again. This is to be obtained as efficiently as possible by means of the embodiments according to the invention.

In order for this to be obtained heat exchanger arrangements according to the invention are characterized in that the last mentioned box device disposed along the side of the heat exchanger is fitted with at least one further opening facing away from the heat exchanger and that a register arrangement is fitted which simultaneously opens, respectively closes this opening and the path for fluid through the box device from the heat exchanger to the discharge opening for this fluid of the heat exchanger arrangement.

By means of embodiments of the heat exchanger arrangement in accordance herewith it is obtained that the fluid which flows into the stable may comprise a suitable given and controllable proportion between fluid heated by heat recuperation and fluid which has a temperature which corresponds to the temperature of the fluid before passage through the heat recuperating heat exchanger according to the invention.

A further development according to the invention for its improvement is characterized in that a box device is fitted which connects the areas of the first mentioned two box devices along the the first mentioned of the sides of the heat exchanger, the box device being fitted with a passage register which adjusts the amount of fluid which passes through this box device and bypasses the input flow into the heat exchanger for the second of the two fluids.

In this way the heat recuperation efficiency may be adjusted from a suitably low efficiency determined by the mechanical proportion of the cross sections determined by the proportion between on the one hand the heat axchanger cross section for the first fluid and on the other hand the sum of this heat exchanger cross section plus the cross section of the conduit with the fully open passage register, to the maximum heat recuperation efficiency obtainable.

An embodiment which is advantageous both for the heat exchanger arrangement and for the installation of the heat exchanger is according to the invention characteristic in that the heat exchanger is fitted in particular to the outside of the wall of a building, in that the box device with the said register arrangement is disposed closest to this wall and preferably parallel to it and with the said opening for passage of fluid disposed at a distance from the wall which corresponds to the cross section of the fluid flow. In this way a fairly compact and also less expensive heat exchanger arrangement is obtained in which there is provided a good practical separation on the outside between the two fluid flows which pass through the heat exchanger arrangement.

An embodiment which ensures a high heat recuperation is according to the invention in particular obtained if the heat exchanger is disposed with a mainly rectangular cross section and with the longest side of the rectangle of the cross section disposed closest to the two box devices disposed along the sides of the heat exchanger.

The heat exchanger is hereby placed rather centrally in the combined heat exchanger arrangement and in such a way that as an ensemble a high heat exchanger surface area is obtained between the two media flows and small heat losses to the surroundings.

Finally it has shown itself to be advantageous, in order to obtain a good separation between the two fluids which pass through the heat exchanger according to the Invention, that the said input opening to the heat exchanger for the second fluid is connected by a conduit with at least one input opening for this fluid flush with or in the side or sides of the other box device which abut(s) directly onto the that side of the box device which is closest to the heat exchanger.

A further development which gives the possibility of a series of embodiments according to the invention which are advantageous in several respects may be obtained if that box device which is the last mentioned according to the first solution mentioned above and which is the box device that is disposed along the side of the heat exchanger (VV) is provided with at least one further opening directed away from the heat exchanger for passage of fluid from the heat exchanger through the box device and along to a further box device and to the discharge opening for this fluid of the heat exchanger arrangement, which further box device may at the same time be common to at least one further heat recuperating heat exchanger.

By using such an embodiment there are possibilities for on the one hand to require a single input opening only for the second fluid which is heated by the first fluid and on the other hand that in particular two identical but laterally reversed heat recuperating heat exchangers may cooperate mutually to provide a suitable ventilation free of draughts for a larger stable space, while the two heat exchangers have individual circuits for passage of spent air from which heat is to be recuperated, whereas they have mutual inputs and discharges for the fresh air which hence receives heat from both heat exchangers, where the fluid is split to pass through the one or the other heat exchanger and combined afterwards, and where the control of the fresh air is practically performed by the same register arrangement which will be described more fully in the following. In order to obtain this advantageously and at the same time to enable a modular construction the invention is characterized in that the said input opening for the second fluid is connected to the further box device which comprises at least one opening in a wall which serves as the said input opening for this fluid and that in the further box device is disposed a separating register element or a separating wall between fluid arriving at the input of the heat exchanger and fluid flowing to the discharge.

Practical experience shows that in a stable space just as efficient heat exchange as well as working conditions are obtained when no heat recuperation is desired, such as during hot summer weather, provided, according to the invention, the heat exchanger is characteristic in that the last mentioned register element in its function as a shunt register element between the arriving and the discharged parts of the last mentioned fluid completely or partly takes over the function of the register arrangement disposed in the first mentioned box device.

A register arrangement of this kind may be interconnected in a particularly simple fashion provided the first-mentioned register is connected to the shunt register element disposed in connection with the further box device by means of known connection means to such a degree that an opening movement (and a closing movement respectively) of one causes an opening (i.e. a non-closing) movement (and a closing (i.e. a non-opening) movement respectively) of the other.

This last register arrangement furthermore cooperates in a particularly simple way with a register possibly disposed at the discharge for spent air at the heat exchanger in order to to prevent condensation from the heat exchanger area, which is closed when it is not desired to discharge spent air. This register may be incorporated in the said interconnection in that the register is at least opened somewhat when the above mentioned registers are opened but slightly.

Embodiments according to the invention will be described in greater detail in the following with reference to the drawing in which:
Fig. 1 in perspective representation, seen from the outside, shows a heat exchanger arrangement according to the invention,
Fig. 2 shows the main parts of an embodiment like that shown in Fig. 1, while the placement of the essential elements of a heat exchanger arrangement according to the invention is shown in dotted lines,
Fig. 3 shows a vertical section through the center of a heat exchanger arrangement according tothe invention as in Fig. 2,
Fig. 4 shows a further development according to the invention where fluid II passes a further box device which alternatively may be common to a further heat recuperating heat exchanger indicated behind it,
Fig. 5 shows the embodiment of Fig. 4 as seen from a different direction and with the further box device shown partly in section,
Fig. 6 in perspective shows the placement of controlling registers disposed as in Fig. 4, and
Fig. 7 shows details of that shown in Fig. 6.

In the figures of the drawing identical elements or elements having the same function are indicated by means of the sane reference numbers.

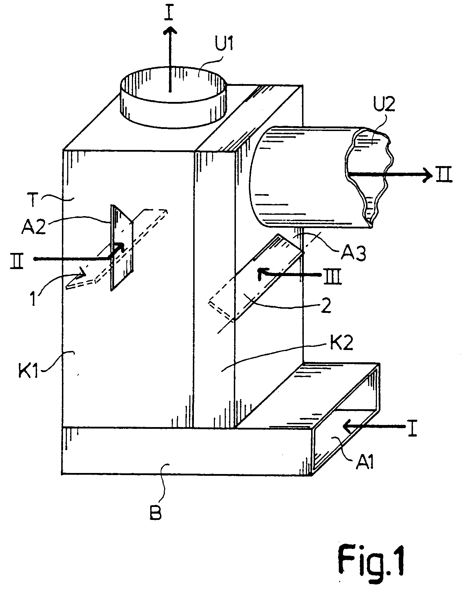

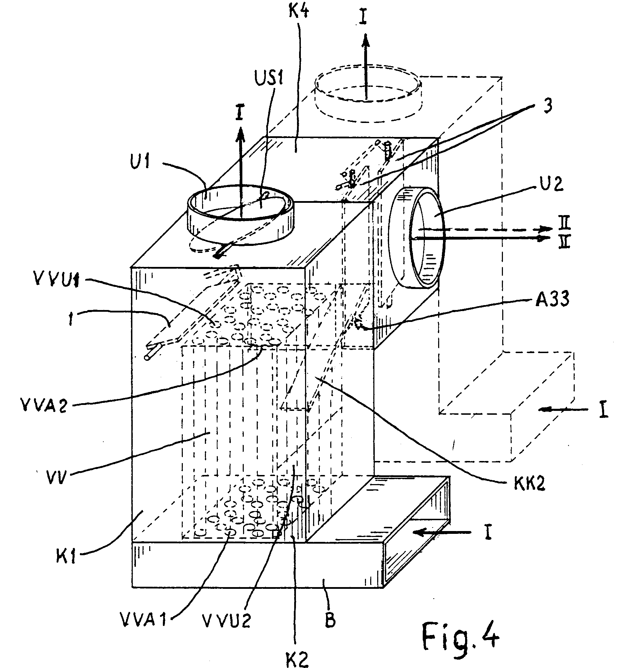

In Figs. 1 - 3 of the drawing an embodiment of a heat exchanger arrangement according to the invention is shown with small variations. In Figs. 4 - 7 a further development according to the invention is shown.

The heat exchanger arrangement is shown without indication of driving ventilators. Such ventilators may be fitted in conjunction with further conduits attached to the heat exchanger arrangement shown but may as such also, alternatively or possibly only relating to a single ventilator be fitted arbitrarily where room might be found for it in the heat exchanger arrangement.

Two fluids I and II pass through the heat exchanger arrangement. Whereas the heat exchanger arrangement is in the first instance designed for in particular use in stables, the fluid I will be spent air from the stable which thereby apart from exhaust air from the animals contains ammonia and dust, dust particles, etc. and which via suitable conduits arrives from the floor area of the stable to the input A1 of the heat exchanger arrangement and through a bottom box device B to the bottom inlet VVA1 for a heat exchanger VV belonging to a heat exchanger arrangement and disposed centrally therein. From the discharge VVU1 in the top of the heat exchanger the fluid I flows after giving up its heat in the heat exchanger via an upper space T in the top of the heat exchanger arrangement via an output U1 into the surrounding free atmosphere, possibly via a further adjacent set of discharge conduits not further illustrated where treatment of spent air may possibly take place.

From the bottom box device B however a box device K1 is disposed to conduct a further proportion of the fluid I which arrives via A1 past the heat exchanger VV and directly to the upper space T from which it is removed via the discharge U1. In order to control the flow through the box device K1 there is fitted a register arrangement 1. When the register arrangement 1 is closed the whole cross section of the fluid I passes via the heat exchanger VV. When the register arrangement 1 is opened a further part of the cross section of the fluid I bypasses the heat exchanger VV to the discharge U1. The throughput for the fluid I is thereby increased.

The second fluid II which is typically cold, fresh air from the surrounding free atmosphere is conducted via an inlet A2 of which two are in reality envisaged according to the embodiment shwon on the drawing, since a further inlet A2 is disposed in the side of the heat exchanger arrangement facing away from the observer. For clarity only a single inlet A2 is shown in the drawing, but several more could be fitted, e.g. in the left wall of the heat exchanger not visible on the drawing as suitable ducting will establish the necessary conduit connections.

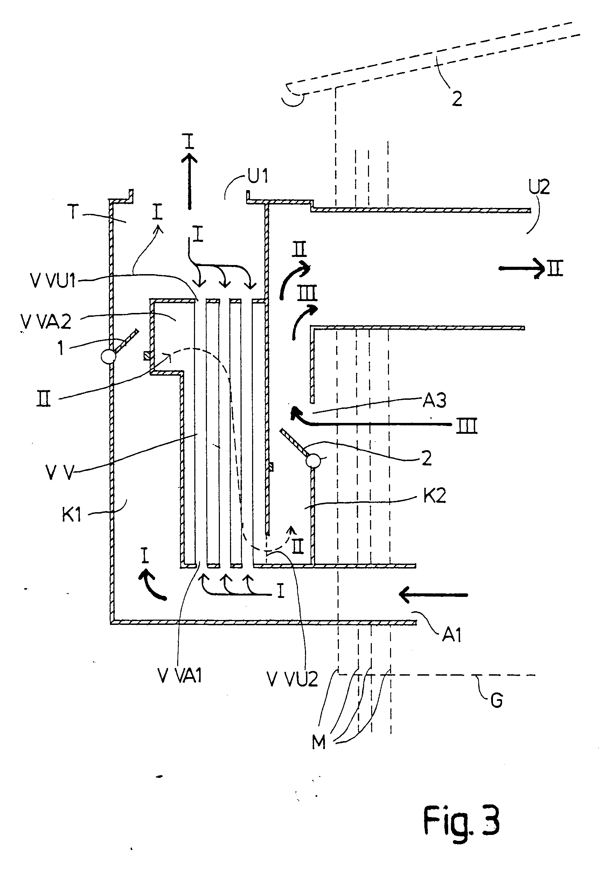

The inlet A1 is communicating directly with a heat exchanger inlet VVA2 disposed near the discharge of the heat exchanger VVU1. From this heat exchanger the fluid II which absorbs heat from the first fluid I via the heat exchanger VV, identified by a dotted arrow II in Fig. 3, flows via a suitably disposed discharge VVU2, e.g. a latticed discharge and arrives at the lower part of a box device K2 which is placed at the other side of the heat exchanger VV and parallel to it, and through the box device to the discharge U2 of the heat exchanger arrangement.

As in the case of the other fluid I there is in this case also fitted a register arrangement 2. This register arrangement is different, however. This enables a complete stop for flow of the fluid II through the box device K2, but simultaneously a fluid III is given access via an inlet A3 and mixes with the fluid II provided the register arrangement 2 is not made to block entirely the passage of fluid II through the box device K2, and the mixture is led into the stable as fresh air via the discharge U2.

The fluid III is also typically cold fresh air from the surrounding free atmosphere.

The whole heat exchanger arrangement is in Fig. 3 shown placed slightly outside a stable wall M where the floor G and the roof L indicate that fresh air II is taken into the stable near its ceiling, alternatively that spent air I is discharged near the stable floor G.

It is seen that the heat exchanger VV is disposed very centrally in the heat exchanger arrangement and that it has a rectangular cross section in the horizontal direction where the long side of the rectangle is that nearest to the box devices K1 and K2. Hereby a more efficient heat conduction between the fluids I and II is ensured during their passage through the heat exchanger arrangement, and small heat losses to the surroundings, as the heat exchanger is considered for being fitted out-of-doors. On the other hand the way in which it is constructed lead to savings in materials in manufacturing. Furthermore a compact construction facilitates mounting and to find a place for it on or by a stable. A not too large distance beetween the stable wall and the box device K2 is advantageous for obtaining a good separation between the fluids I and II, and short conduits for them may be obtained dæuring the fitting of the arrangement.

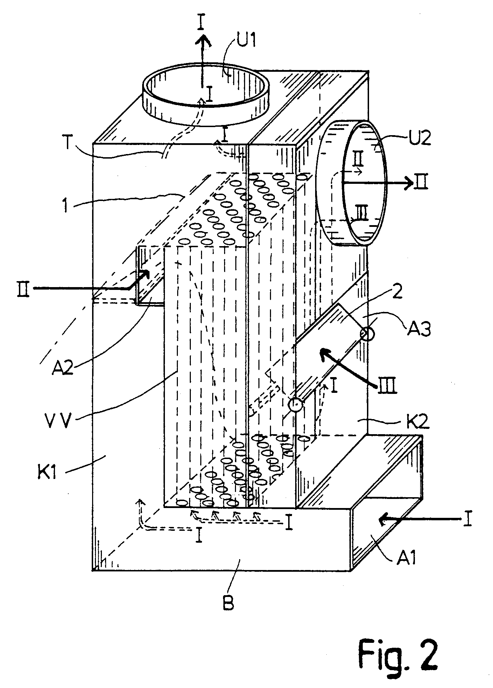

It should be noted that the opening A2 is of different shape in Figs. 1 and 2. The shape according to Fig. 1 necessitates an inner turning-up into the top space T of the crosswise disposed channel which in the heat exchanger arrangement connects the inlet VVA2 of the heat exchanger and the inlet or inlets A2. This turning-up may be advantageous in more than one way if the proportion of fluid I which passes through the box device K1 is not meant to give off too much heat to the surroundings ont the way out from the box device K1 to the top space T.

The efficiency of heat recuperation may, without any problems be brought to about 60 % by means of embodiments according to the invention.

The cross sections for the fluids I and II may in practice be quite small, in the order of e.g. 0.05 square meters, but they may also be considerable, e.g. 5 to 10 square meters.

For stables one will typically select a capacity for the ventilators which is too large, e.g. twice as large as required. During the day a stronger ventilation will be required than during thenight where the animals sleep. During the day a more tempered fresh air is required than during the night where the fresh air must be supplied with a relatively higher temperature but in lesser amounts than during the day. It is furthermore required, in particular for the sake of young animals in the stable and for the sake of newborn animals in the stable, that temperature shocks are avoided at the change-over times from day to night and furthermore from night to day. By the present heat exchanger arrangement a solution to this problem is provided in that a simple adjustment of the register arrangements 1 and 2 enables this.

For instance at the change-over from day to night the register arrangement 2 is brought by adjustment to supply less fluid III and to supply a larger amount heat recuperating fluid II to the celing area of the stable while possible simultaneous complete or partial closure of the register arrangement 1 enables larger heat recuparation, but at the same time passage of less fluid I per unit of time. The amount of adjustment will however be dependent of the time of year, because blocking of fluid II through the box device K2 by means of the register arrangement 2 enables complete prevention of heat recuperation so that the temperature in the stable does not rise in an undesired manner, alternatively it is by opening the register arrangement 1 to its full possible to ensure that the fluids I and II pass each other at a maximum heatwise distance so that the heat recuperation is virtually nil.

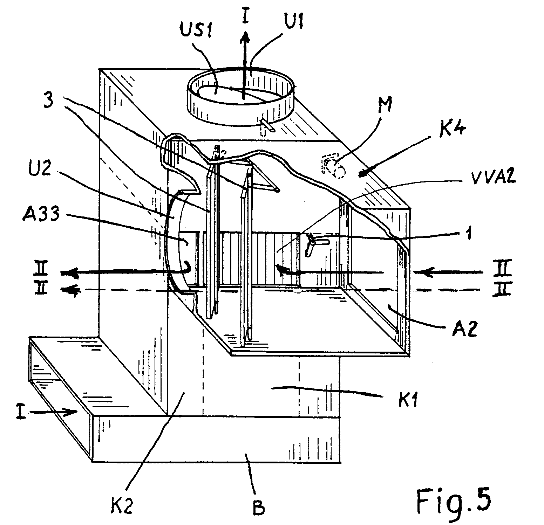

As indicated the Figs. 4 to 7 show an embodiment of a further development of the invention. At a first look the embodiment looks like the embodiment in Figs. 1 to 3, but there is the difference that the inlet VVA2 to the heat exchanger for the fluid II is not connected to the external inlet A2 but on the contrary is disposed directly in the wall of the heat exchanger which faces a further box device X4 which is most clearly to be seen in Fig. 5, and the inlet A2 is disposed in an outer wall in the further box device K4 which is most clearly seen in Fig. 5. Similarly there is the fifference that the external inlet A3 has been excluded as well as the register 2. Instead the inside of the box device K2 is connected to inside of the further box device K4 via an opening A33 placed next to the opening VVA2. To keep the fluid I separate there is a wall KK2 in the box device K2. In the further box device there is either fitted a separating wall or a register device, here shown as a register element 3 which will rather function as a shunt register element 3. When the shunt register element 3 is closed the fluid II passes through the heat exchanger as indicated by the arrows II in order to absorb recuperation heat from it in the same way as described above when the register 2 is in the position whrere register 2 blocks the inlet A3 and the fluid II is discharged through the output U2 which is now disposed in a side wall in the further box device K4 as shown in Figs. 4 and 5 instead or in a side wall in the box device K2.

If the shunt register element 3 is opened, which is here shown as a louvered register consisting of two vanes rotatable about in the presenet case vertical shafts, the fluid II will pass shuntwise directly from inlet A2 to discharge U2. By a larger and larger degree of opening of the shunt register element, in the present disposition in practice a lesser and lesser proportion of the fluid II will pass the heat exchanger. If this opening is coupled to a simultaneous opening of the above mentioned register 1 at the heat exchanger, a lesser and lesser proportion of the spent air will pass through the heat exchanger for giving off heat. In case no heat recuperation is desired, such as is the case on hot summer days, the registers 1 and 3 are fully opened.

In certain cases it may be practical to be able to block the passage of spent air, i.e. for the fluid I, as for instance if draughts are to be prevented in the stable space, e.g. when stable gates are opened for a longer stretch of time. To this end there may in the discharge U1 be provided a register vane US1, the degree of opening of which may be controlled by e.g. a motor M, while a linkage, a chain cr the like which is not shown connects the motor to the register US1.

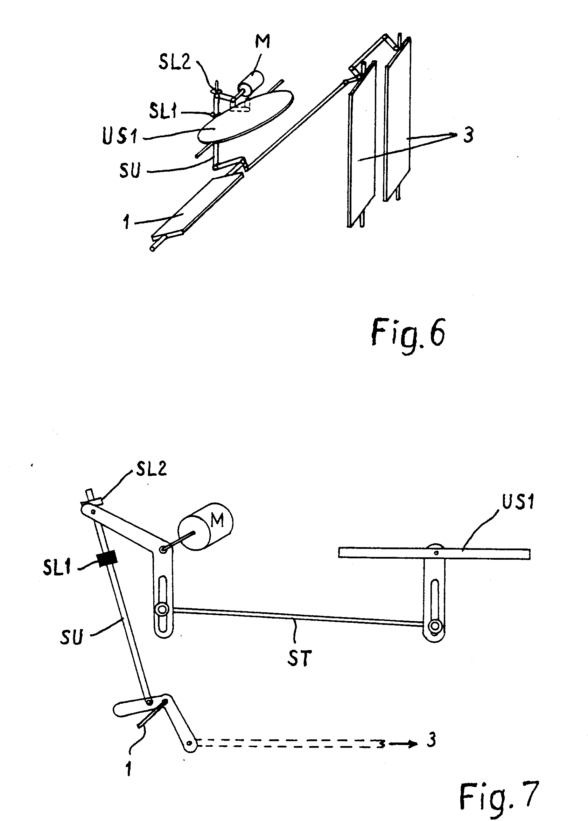

In Fig. 6 of the drawing there is only shown the respective placement of the registers 1, 3, and US1. The registers 1 and 3 may be controlled by servos which are not shown or only a common servo which opens and closes the registers controlled by temperature and moisture conditions. By means of a particularly simple transmission linkage beteween the registers it is possible to obtain a quite precise control using only a common drive motor for the registers 1 and 3. Such a transmission arrangement is shown in Figs. 6 and 7. Fig. 7 actually shows the same as Fig. 6 but only as far as it relates to register US1.

The registers 1 and 3 follow each other to a suitable degree. This degree is adjustable, as the transmission linkage is a simple rod ST, the bearing ends of which are adjustably connected to slots in rotatable arms which are fixed to the registers 1 and 3. At the register 1 there is a further rotatable arm with a corresponding slot and a linkage SU which carries abutment devices SL1 and SL2, between which a rotatable arm connected to or connectable to the drive motor M is slidably carried by and connected to the linkage SU. It is considered that the construction is such that without being hampered by it the linkage SU may and is able to rotate the motor freely, mechanically speaking and at the same time the position of the register US1 has an influence. By means of the abutments SL1 andSL2 this transmission mechanism ensures that by only a lesser degree of opening of the registers 1 and 3 also the register US1 will be just sufficiently opened not to hamper the necessary passage past US1 of fluid I, in order that the functioning of the heat exchanger is retained as desired controlled by the common adjustment of the registers 1 and 3.

It should be noted that in particular the heat recuperating heat exchanger described in connection with Figs. 4 and 5, alternatively Figs. 6 and 7, distinguishes itself in being mountable as well on the outside of a stable wall cooperating with the required passageways in the wall as on the inside of a stable wall while retaining the same results and disposition, and it may be mounted directly on the wall as well as at a distance from it, determined by the space available.

## Claims

1. A heat exchanger arrangement for the recuperation of heat, in particular for recuperation of heat from a fluid (I), such as a gaseous fluid and transmission of this heat to another, colder fluid (II), such as a gaseous fluid, whereby the heat exchanger arrangement is of a kind where the two fluids pass through a heat exchanger in opposite directions, **characteristic in** that the heat exchanger arrangement comprises a heat exchanger (VV) which is provided with an input (VVA1) at one heat exchanger end for one of the fluids (I or II, such as I) and with an output (VVU1) for the same fluid (I) at the opposite end whereby there is provided for the fluid (I) at least either an input box device (B) and/or an output box device (T) in conjunction with the heat exchanger (VV), and where the heat exchanger (VV) via a side close to that end which is prcvided with an output (VVU1) is provided with an input (VVA2) for the other fluid (II or I, such as II) and that the heat exchanger (VV) at a side close to the the other end provided with an input (VVA1) is provided with an output (VVU2) for the other fluid (II), which fluid is conducted via a box device (K2) disposed along this side of the heat exchanger to a place, section or area of consumption for heat exchanged fluid (II).

2. A heat exchanger arrangement according to claim 1, **characteristic in** that the last mentioned box device (K2) disposed along the side of the heat exchanger (VV) is fitted with at least one further opening (A3) facing away from the heat exchanger (VV) and that a register arrangement (2) is fitted which simultaneously opens, respectively closes this opening (A3) and the path for fluid (II) through the box device (K2) from the heat exchanger (VV) to the discharge opening (U2) of the heat exchanger arrangement for this fluid (II).

3. A heat exchanger arrangement according to claim 1 or 2, **characteristic in** that a box device (K1) is fitted which connects the areas of the first mentioned two box devices (K2) along the the first mentioned of the sides of the heat exchanger (VV), the box device being fitted with a passage register (1) which adjusts the amount of fluid (I) which passes through this box device (K1) and bypasses the input flow into the heat exchanger (VV) for the second (II) of the two fluids.

4. A heat exchanger arrangement according to claim 1, 2, or 3, **characteristic in** that the heat exchanger (VV) is fitted in particular to the outside of the wall (M) of a building, in that the box device (K2) with the said register arrangement (2) is disposed closest to this wall (M) and preferably parallel to it and with the said opening (A3) for passage of fluid (III) disposed at a distance from the wall (M) which corresponds to the cross section of the fluid flow.

5. A heat exchanger arrangement according to claim 1, 2, 3, or 4, **characteristic in** that the heat exchanger (VV) is disposed with a mainly rectangular cross section and with the longest side of the rectangle of the cross section disposed closest to the two box devices (K1 and K2) disposed along the sides of the heat exchanger.

6. A heat exchanger arrangement according to claim 1, 2, 3, 4, or 5, **characteristic** **in** that the said input opening (VVA2) to the heat exchanger (W) for the second fluid (II) is connected by a conduit with at least one input opening (S2) for this fluid (II) flush with or in the side or sides of the other box device (K1) which abut(s) directly onto the that side of the box device (K1) which is closest to the heat exchanger (VV).

7. A heat exchanger arrangement according to claim 1, 2, 3, 4, 5, or 6, **characteristic** **in** that the box device (K2) last mentioned in Claim 1 disposed along the side of the heat exchanger (VV) is provided with at least one further opening (A33) directed away from the heat exchanger (VV) for passage of fluid (II) from the heat exchanger (VV) through the box device (K2) and along to a further box device (K4) and to the discharge opening (U2) for this fluid (II) of the heat exchanger arrangement, which further box device (K4) may at the same time be common to at least one further heat recuperating heat exchanger.

8. A heat exchanger arrangement according to claim 7, **characteristic** **in** that the said input opening (VVA2) for the second fluid is connected to the further box device (K4) which comprises at least one opening in a wall which serves as the said input opening (A2) for this fluid and that in the further box device (K4) is disposed a separating register element (3) or a separating wall between fluid arriving at the input (VVA2) of the heat exchanger and fluid flowing to the discharge (U2).

9. A heat exchanger arrangement according to claim 8, **characteristic** **in** that the last mentioned register element (3) in its function as a shunt register element between the arriving and the discharged parts of the last mentioned fluid completely or partly takes over the function of the register arrangement (2) disposed in the first mentioned box device (K2).

10. A heat exchanger arrangement according to claim 8 or 9, **characteristic in** that the first-mentioned register (1) is connected to the shunt register element ( 3 ) disposed in connection with the further box device (K4) through known connection means to such a degree that an opening movement (and a closing movement respectively) of one causes an opening (i.e. a non-closing) movement (and a closing (i.e. a non-opening) movement respectively) of the other.
